(19) **Europäisches Patentamt / European Patent Office / Office européen des brevets**

(11) **EP 4 411 666 B1**

(12) **FASCICULE DE BREVET EUROPEEN**

(45) Date de publication et mention
de la délivrance du brevet:
**04.03.2026 Bulletin 2026/10**

(21) Numéro de dépôt: **24152159.0**

(22) Date de dépôt: **16.01.2024**

(51) Classification Internationale des Brevets (IPC):
**G06V 10/143** $^{(2022.01)}$    **G06V 40/16** $^{(2022.01)}$
**G06V 40/40** $^{(2022.01)}$    **H04N 25/11** $^{(2023.01)}$
**G06V 10/141** $^{(2022.01)}$    **H04N 25/13** $^{(2023.01)}$
**H04N 25/131** $^{(2023.01)}$

(52) Classification Coopérative des Brevets (CPC):
**G06V 10/143; G06V 10/141; G06V 40/172;
G06V 40/45; H04N 25/13; H04N 25/131**

(54) **SYSTÈME D'ACQUISITION D'UNE IMAGE COULEUR ET D'UNE IMAGE INFRAROUGE D'UNE SCÈNE**

SYSTEM ZUR ERFASSUNG EINES FARBBILDES UND EINES INFRAROTBILDES EINER SZENE

SYSTEM FOR ACQUIRING A COLOR IMAGE AND AN INFRARED IMAGE OF A SCENE

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **03.02.2023 FR 2301041**

(43) Date de publication de la demande:
**07.08.2024 Bulletin 2024/32**

(73) Titulaire: **IDEMIA Public Security France
92400 Courbevoie (FR)**

(72) Inventeurs:
• **BEAUDET, Jean
92400 Courbevoie (FR)**
• **CHU, Baptiste
92400 COURBEVOIE (FR)**
• **SIWEK, Jean-François
92400 COURBEVOIE (FR)**
• **MAILLARD, Sylvain
92400 COURBEVOIE (FR)**

(74) Mandataire: **IPS
2, place Samuel de Champlain
92400 Courbevoie (FR)**

(56) Documents cités:
**EP-A1- 3 242 249    FR-A1- 3 102 324**

**Description**

L'invention concerne un procédé d'acquisition d'une image couleur et d'une image infrarouge d'une scène, ainsi que le système d'acquisition mettant en œuvre ledit procédé.

L'invention s'applique, notamment, à des domaines techniques tels que la sécurité pour la reconnaissance d'informations biométriques, notamment des visages, d'un individu.

**Etat de la technique antérieure**

Pour réaliser un système de reconnaissance faciale avec anti-fraude, un système de caméra permettant d'acquérir de manière simultanée à la fois une image proche infrarouge du visage, et une image dans le spectre visible est classiquement utilisé.

Pour réduire le coût et l'encombrement d'un tel système on connait le document FR3102324 qui décrit un dispositif permettant de combiner les deux images sur un capteur d'image unique, ce dispositif d'acquisition d'image RVB ne comprenant aucun filtre infrarouge et comprenant un filtre passe-haut configuré pour atténuer la composante bleue de la lumière de sorte à récupérer une information infrarouge sur des photosites bleus. Ce dispositif offre une bonne résolution de la composante verte cependant dans les environnements lumineux d'utilisation d'un tel dispositif, il peut y avoir des différences très importantes de niveau entre l'infrarouge et le visible, ce qui rend difficile et même impossible l'exploitation des deux images infrarouge et visible en même temps, en raison de la dynamique limitée des capteurs d'image. En outre, avec un unique jeu de configuration de paramètres d'exposition tels que le temps d'exposition et le gain, ce dispositif ne permet pas de restituer correctement les deux images. EP 3242249 A1 décrit un dispositif de capture d'empreintes digitales réalisant des acquisitions séquentielles à différentes longueurs d'onde avec ajustement de l'illumination en fonction de l'image acquise.

Les cas d'usage dans lesquels les différences de niveau sont très importantes entre l'infrarouge et le visible concernent notamment :

- les environnements lumineux sans lumière ambiante naturelle, c'est à dire comprenant une lumière ambiante uniquement de source artificielle, telle qu'un éclairage par diode électroluminescente LED de l'acronyme Light Emitting Diode, car ces environnement ne comprennent quasiment aucun signal lumineux infrarouge ou proche infrarouge, mais uniquement des signaux lumineux dans le visible ;
- les environnements lumineux dont la lumière naturelle est filtrée au moyen par exemple de film anti-chaleur disposé sur les vitres, car ces environnements ne comprennent également que très peu de signal lumineux infrarouge ;
- les environnements non lumineux, car dans le noir complet aucun signal n'est reçu.

Une solution peut consister en l'ajout au dispositif d'un éclairage émettant dans le visible, appelé aussi éclairage blanc, et d'un éclairage émettant dans l'infra-rouge, lorsque les deux caméras sont séparées, chacune étant sensible à un seul éclairage, soit visible, soit infrarouge, mais en cas de caméra unique sensible aux deux longueurs d'onde, l'application directe de cette solution ne convient pas. En outre, l'intégration de deux caméras génère des contraintes d'architecture, de coût et d'encombrement.

La présente invention vise à pallier au moins en partie ces inconvénients, menant éventuellement à d'autres avantages.

**Exposé de l'invention**

L'invention concerne un système d'acquisition d'une image couleur et d'une image infrarouge d'une scène, ledit système d'acquisition comprenant :

- un dispositif d'acquisition d'image, ledit dispositif étant sensible aux longueurs d'onde visibles et infrarouge, comprenant :

  - un capteur ;
  - un objectif configuré pour focaliser la lumière reçue en entrée du dispositif d'acquisition sur le capteur, un filtre passe double bande étant placé devant le capteur, et notamment entre l'objectif et ledit capteur ;
  - un module de traitement connecté audit dispositif d'acquisition d'image configuré pour séparer, en sortie de capteur, l'image infrarouge et l'image visible et pour définir au moins un signal à asservir et une consigne d'asservissement afférente, ladite au moins une consigne d'asservissement étant une consigne d'asservissement de signal infrarouge et/ou visible en fonction de laquelle est pilotée au moins une source artificielle de lumière;

- l'au moins une source artificielle de lumière éclairant ladite scène, ladite au moins une source comportant une source artificielle de lumière infrarouge émettant un signal lumineux dans l'infrarouge et/ou une source artificielle de lumière visible émettant un signal lumineux dans le visible.

Ce système d'acquisition permet, avec une unique caméra, et donc un avantage en terme de compacité, d'obtenir deux images (infrarouge et visible) exploitables, pour de la reconnaissance biométrique ou de la lecture de code visuel, dans toutes les conditions lumineuses.

Par exemple, le filtre passe double bande pourrait être constitué d'un réseau de filtres.

De manière avantageuse, ledit dispositif d'acquisition d'image comprend un filtre double bande passante dont :

- en cas de capteur à au moins quatre photosites différents, la première bande passante du filtre est configurée pour laisser passer des longueurs d'ondes visibles, notamment inférieures à 650 nm, et en cas de capteur à trois photosites différents, la première bande passante du filtre est configurée de manière à atténuer la composante bleue de la lumière, notamment avec une première bande passante s'étendant par exemple entre 530 à 650 nm; et
- la seconde bande passante est configurée pour laisser passer les longueurs d'onde infrarouge, notamment la seconde bande passante s'étend de 800 à 875 nm ;

ce qui permet notamment , grâce à la bande infrarouge restreinte, d'avoir une répétabilité dans le rendu des images infrarouge versus les conditions lumineuses externes, le spectre est donc maitrisé.

Par exemple, dans ces capteurs, les quatre photosites différents comprennent notamment les photosites Rouge, Vert, Bleu et Infrarouge et les trois photosites différents sont notamment les photosites Rouge Vert et Bleu, sachant que selon l'invention dans le cas d'un tel capteur à trois photosites, ce dernier photosite n'est plus sensible qu'à l'Infrarouge, de par l'application du filtre, ce qui permet une bonne acquisition des visages puisque la composante bleue n'y est guère représentée.

Avantageusement, la seconde bande passante s'étend à partir de 760 nm-800 nm, ce qui permet de récupérer du signal infrarouge suffisant même en cas de présence de film anti-chaleur car ce dernier coupe autour de 800 nm. En effet, sans cette bande passante élargie, en cas de film anti-chaleur il pourrait y avoir plus de 10klux de visible et quasiment pas d'infrarouge, il faudrait donc que le système soit apte à fournir un éclairage infrarouge capable de générer le même niveau de signal que l'éclairage visible de 10klux pour distinguer l'infrarouge. Mais grâce à l'élargissement de la bande passante, il y a suffisamment d'infra-rouge pour obtenir une image, sans avoir besoin d'éclairage infrarouge, dont le dimensionnement peut être réduit de manière à ce qu'il soit apte à générer un niveau de signal équivalent à un éclairement visible de 1000 lux seulement, de façon à répondre au cas d'usage correspondant à de la lumière ambiante (non émise par le système) artificielle forte, par LED par exemple.

De manière avantageuse :

- la source artificielle de lumière émettant dans l'infrarouge est configurée pour émettre, dans une plage de distance d'utilisation, notamment de 40 à 100 cm, un signal équivalent au signal généré par une lumière visible ambiante intense, notamment 1000 lux, par exemple une diode électroluminescente à 850 nm, dont le spectre s'étend de 800 à 875nm

et/ou

- la source artificielle de lumière émettant dans le visible est configurée pour éclairer de manière satisfaisante dans le noir complet, notamment 50 lux à une distance d'utilisation d'environ 70 cm;

ce qui permet de disposer de sources de lumière visible et infrarouge ou proche infrarouge puissantes sans présenter de risque ni inconfort (éblouissement) pour l'utilisateur, l'éclairage infrarouge pouvant être modulé en intensité, notamment entre 0 et l'équivalent de 1000 lux.

Avantageusement, le système comporte un autre dispositif de prise de vue uniquement sensible dans le visible, synchronisé sur le dispositif d'acquisition et dont les paramètres d'exposition sont contrôlés indépendamment de ceux du dispositif d'acquisition, ce qui permet la stéréoscopie et ainsi de détecter des fraudes de tous types à coût restreint.

De manière avantageuse l'autre dispositif peut comporter un capteur monochrome ou un capteur aux photosites au moins Rouge, Vert et Bleu, ce qui permet d'obtenir de la stéréoscopie à coût réduit.

L'invention concerne également un procédé d'acquisition d'une image couleur et d'une image infrarouge d'une scène, ledit procédé d'acquisition comprenant des étapes de :

- réception d'une image à partir d'un dispositif d'acquisition d'image sensible aux longueurs d'onde visibles et infrarouge ;
- traitement de ladite image reçue séparant l'image infrarouge et l'image visible et définissant au moins un signal à asservir et une consigne d'asservissement afférente, ladite au moins une consigne d'asservissement étant une consigne d'asservissement de signal infrarouge et/ou visible en fonction de laquelle est pilotée au moins une source artificielle de lumière infrarouge et/ou visible ;

le procédé présentant les mêmes avantages que le système.

De manière avantageuse, l'image reçue comporte des métadonnées, telles que gain et temps d'exposition propres à ladite image reçue.

Avantageusement, l'étape de traitement comporte une étape de détection d'un objet dans l'image couleur et/ou infrarouge et de détermination de distance entre l'objet détecté et ledit dispositif d'acquisition, ce qui permet d'estimer le signal additionnel produit par l'éclairage artificiel du système sur l'objet.

De manière avantageuse, l'étape de traitement comporte une étape de calcul d'au moins deux métriques sur tout ou partie de l'image, la première métrique caractérisant le signal infrarouge, la deuxième métrique caractérisant le signal visible, ce qui permet de quantifier les deux types de signaux et de pouvoir ensuite les comparer, notamment entre eux.

Avantageusement, ladite partie de l'image est une région d'intérêt de l'image délimitant ledit objet détecté, ledit objet étant notamment une partie corporelle ou une information, telle qu'un code visuel, notamment imprimée sur un document physique, ce qui permet de circonscrire le calcul des métriques à une zone d'intérêt dans l'image, telle qu'un visage dans le cadre par exemple d'une application à la reconnaissance faciale, ou telle qu'une information en cas d'application à la lecture de documents physiques.

De manière avantageuse, les au moins deux métriques sont calculées comme étant au minimum la moyenne sur tout ou ladite partie de l'image sur chaque canal de longueur d'onde dudit signal caractérisé, ce qui permet de ne pas travailler avec des images proches de la saturation.

Avantageusement, l'étape de traitement comporte :

- une étape d'estimation d'une composante de la première métrique caractérisant une quantité de signal infrarouge due à l'infrarouge ambiant c'est-à-dire non émis par l'au moins une source artificielle de lumière infrarouge et/ou visible, et ;
- une étape de calcul de répartition d'éclairage ambiant, notamment sous la forme du ratio de quantité de la composante de la première métrique caractérisant le signal infrarouge due à l'infrarouge ambiant sur la deuxième métrique, et ;
- une étape de comparaison de ladite répartition à une répartition cible prédéterminée,

et en ce que la consigne d'asservissement du signal infrarouge est fonction de ladite comparaison, et notamment en ce que la consigne d'asservissement du signal visible est fonction de ladite comparaison ;
ce qui permet un calcul simple et peu consommateur de ressource de la répartition lumineuse.

De manière avantageuse, ladite répartition cible prédéterminée est fonction du rapport du niveau logique infrarouge sur niveau logique visible, lesdits niveaux logiques étant notamment déterminés de manière à ce que la somme de ces deux consignes soit inférieure à la moitié du signal maximal qui peut être restitué par la caméra. En effet, sachant que sur la caméra, les canaux visibles sont également sensibles à l'infrarouge, la somme de ces deux consignes est préférentiellement inférieure à la moitié du niveau logique maximal du signal $N_{max}$ qui peut être restitué par la caméra, par exemple $N_{max}$ = 1023 dans le cas d'une caméra avec une sortie 10 bits, de manière à éviter les saturations et conserver une marge suffisante.

De manière avantageuse, la consigne d'asservissement du signal visible est fonction de ladite comparaison, en ce que si la répartition d'éclairage ambiant calculée est supérieure à la répartition cible alors le signal asservi est le signal infrarouge sur la consigne infrarouge et sinon le signal asservi est le signal visible sur la consigne visible, ce qui permet d'atteindre la consigne même en cas d'infrarouge ambiant moindre, sachant qu'il n'existe guère de cas d'usage opposé, c'est à dire dans lesquels il existe un excès important d'infrarouge dans la scène.

De manière avantageuse, l'étape de traitement comporte :

- une étape de calcul de paramètre d'exposition du dispositif d'acquisition à appliquer, tel que gain et/ou temps d'exposition, notamment en fonction du rapport de l'au moins une consigne d'asservissement sur ledit signal à asservir afférent, pour atteindre ladite au moins une consigne d'asservissement;
  et/ou
- une étape de calcul de commande de pilotage de la source artificielle de lumière infrarouge et/ou visible ;

ce qui permet d'atteindre la consigne d'asservissement du signal à asservir au moyen de paramètres facilement pilotables.

Avantageusement, lesdits paramètres d'exposition (notamment gain et temps d'exposition) à appliquer sont notamment déterminés de manière à ce que leur produit soit égal à au produit desdits paramètres en cours d'application multipliés par un ratio de la consigne à asservir par le signal asservi, ce qui permet d'asservir de manière proportionnelle et linéaire.

De manière avantageuse, l'étape de calcul de la commande de pilotage de la source artificielle de lumière infrarouge du système est effectuée en calculant d'abord le signal infrarouge additionnel nécessaire pour atteindre la consigne d'asservissement du signal infrarouge connaissant le signal infrarouge ambiant, par soustraction à la consigne d'asservissement du signal infrarouge dudit ratio multiplié par le signal infrarouge ambiant :

$$S'_{IRadditionnel} = C_{IR} - \text{Ratio} \cdot S_{IRambiant},$$ puis on calcule un rapport cyclique à appliquer à la source d'éclairage infra-rouge.

Avantageusement, la commande de pilotage de la source artificielle de lumière infrarouge du système est réalisée par modulation du rapport cyclique, ce qui permet de générer un signal équivalent à un éclairement visible entre 0 et 1000 lux dans la plage de distance d'utilisation.

De manière avantageuse, lors de l'étape de calcul de la commande de pilotage de la source artificielle de lumière visible du système

- Si l'éclairage blanc était éteint, et que le produit des paramètres d'exposition dépasse un seuil d'allumage prédéterminé alors on allume l'éclairage blanc ;

- Si l'éclairage blanc était allumé, et que le produit des paramètres d'exposition est inférieur à un seuil d'extinction prédéterminé alors on éteint l'éclairage blanc.

Avantageusement, la commande de pilotage de la source artificielle de lumière visible du système est binaire, ce qui permet une commande simple par hystérésis.

Avantageusement, le procédé d'acquisition comporte une étape d'initialisation effectuant un balayage itératif de configurations jusqu'à la détection de l'objet, chaque configuration comprenant au moins un paramètre d'exposition, tel que gain et/ou temps d'exposition, et un paramètre d'intensité de l'au moins une source de lumière artificielle, les valeurs desdits paramètres étant fixées à des valeurs prédéterminées dans chaque configuration ;
ce qui permet de détecter l'objet recherché quel que soit l'environnement lumineux, car les valeurs fixées des paramètres de chaque configuration correspondent à des optimums dans des cas d'usage distincts, et autant de configurations que de cas d'usage identifiés sont testés l'un après l'autre itérativement jusqu'à « accrocher » l'objet recherché.

Avantageusement, la répartition cible prédéterminée est définie lors de l'étape d'initialisation.

De manière avantageuse, lesdites configurations sont enregistrées sous forme de table dans le module de traitement.

Avantageusement, le procédé d'acquisition selon l'invention est mis en œuvre par le module de traitement du dispositif selon l'invention.

L'invention concerne également un procédé d'authentification d'une partie corporelle caractérisé en ce qu'il comprend:

- acquérir une image couleur et une image infrarouge de ladite partie corporelle par le procédé d'acquisition selon l'invention et en ce que l'objet détecté est une partie corporelle; et
- authentifier la partie corporelle à partir desdites images couleur et infrarouge ; ledit procédé d'authentification présente les mêmes avantages que le procédé d'acquisition, et permet la reconnaissance biométrique.

L'invention concerne également un dispositif d'authentification d'une partie corporelle, comprenant:

- un système d'acquisition d'image selon l'invention ; et
- le module de traitement étant configuré pour détecter une partie corporelle à partir de l'image reçue et pour effectuer une authentification de ladite partie corporelle détectée à partir desdites images couleur et infrarouge ;

ce qui présente les mêmes avantages que le système d'acquisition selon l'invention et permet l'authentification biométrique, en utilisant notamment l'image visible pour "reconnaitre" la personne et l'image Infrarouge pour vérifier l'authenticité du visage (autrement dit détecter une éventuelle fraude).

L'invention concerne également un programme d'ordinateur, comprenant des instructions pour mettre en œuvre, par un dispositif, le procédé d'acquisition selon l'invention, lorsque ledit programme est exécuté par une unité de calcul dudit dispositif, ledit programme présentant les mêmes avantages que précédemment cités. L'unité de calcul peut notamment être celle du module de traitement du dispositif selon l'invention.

L'invention concerne en outre des moyens de stockage, stockant un programme d'ordinateur comprenant des instructions pour mettre en œuvre, par un dispositif, le procédé d'acquisition selon l'invention, lorsque ledit programme est exécuté par une unité de calcul dudit dispositif, lesdits moyens présentant les mêmes avantages que précédemment cités. L'unité de calcul peut notamment être celle du module de traitement du dispositif selon l'invention.

**Brève description des dessins**

L'invention sera bien comprise et ses avantages apparaitront mieux à la lecture de la description détaillée qui suit, donnée à titre indicatif et nullement limitatif, en référence aux dessins annexés dans lesquels :

la figure 1 présente schématiquement un système d'acquisition d'image selon un mode de réalisation de l'invention ;
la figure 2 illustre schématiquement un exemple d'architecture matérielle d'un module de traitement du système d'acquisition d'image selon un mode de réalisation;
la figure 3 illustre un procédé d'acquisition d'une image infrarouge et d'une image couleur selon un mode de réalisation ;
la figure 4 présente schématiquement un système d'acquisition d'image selon un autre mode de réalisation de l'invention ;
la figure 5 présente un dispositif d'authentification selon un mode de réalisation ; et
la figure 6 illustre un procédé d'authentification selon un mode de réalisation.

Les éléments identiques représentés sur les figures précitées sont identifiés par des références numériques identiques.

**Exposé détaillé**

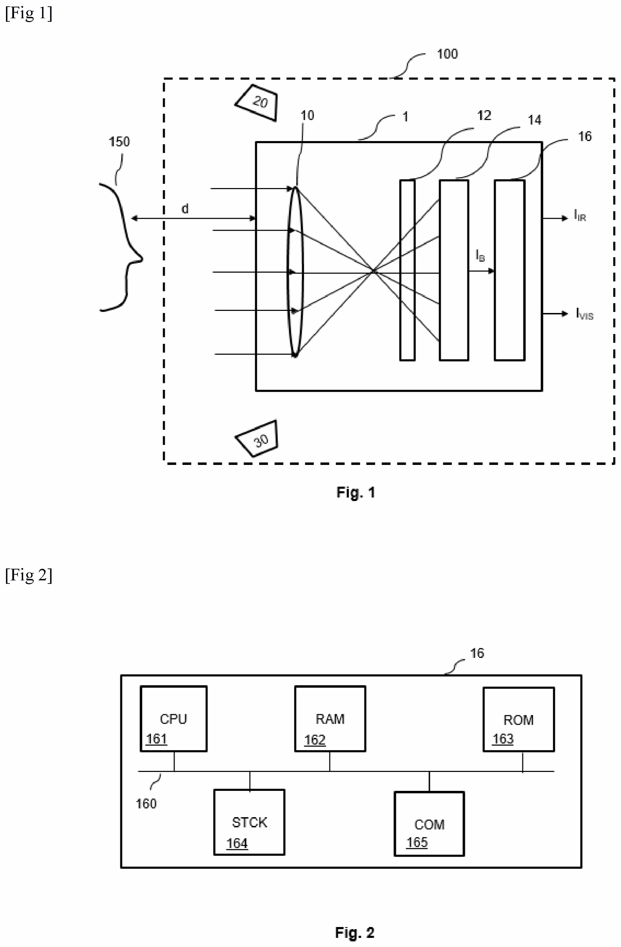

La figure 1 illustre un système d'acquisition d'image selon un mode de réalisation de l'invention.

Le système 100 d'acquisition d'image comporte un dispositif d'acquisition 1 d'images comprenant un objectif 10 lequel comprend au moins une lentille. L'objectif 10 est configuré pour focaliser la lumière reçue en entrée du système et plus précisément du dispositif d'acquisition 1 sur un capteur 14, tel qu'un capteur CCD (de l'anglais « Charge Couple Device ») ou CMOS (de l'anglais « Complementary Metal Oxide Semiconductor »). Le capteur 14 est composé d'une pluralité de photosites. Le dispositif d'acquisition d'image 1 comprend également un filtre 12 passe double bande placé devant le capteur 14 de telle sorte que chaque photosite dudit capteur ne voie qu'une seule couleur, notamment entre l'objectif 10 et ledit capteur 14. Le filtre 12 passe double bande peut notamment être collé à l'objectif ou constituer une couche de traitement sur l'objectif ou constituer un traitement du verre de l'objectif 10, ou encore être positionné devant l'objectif. En variante, le filtre 12 pourrait être un réseau de filtres 0, notamment placés à des positions différentes dans le chemin optique, par exemple un filtre passe haut en amont de l'objectif et un réseau de filtres couleur placé entre l'objectif et le capteur.

Le capteur 14 peut comporter uniquement trois photosites différents ou au moins quatre photosites différents.

Dans le cas d'un capteur 14 comprenant uniquement trois photosites différents, la première bande passante du filtre 12 passe double bande est configurée de manière à atténuer la composante bleue de la lumière, de sorte à récupérer une information infrarouge sur des photosites initialement dédiés au bleu si bien que chaque photosite du capteur 14 ne voie qu'une seule couleur : le canal rouge est ainsi sensible au Rouge et Infrarouge via un premier photosite, le canal vert est sensible au Vert et Infrarouge via un second photosite, et le canal infrarouge est sensible à l'Infrarouge via un troisième photosite ; la première bande passante s'étendant donc par exemple entre 530 à 650 nm. Le dispositif 10 obtenu est alors nommé RVPIR pour Rouge Vert Proche Infrarouge.

Dans le cas d'un capteur 14 comprenant quatre photosites différents, la première bande passante du filtre 12 passe double bande est configurée de manière à laisser passer des longueurs d'ondes visibles, de telle sorte que chaque photosite du capteur 14 ne voie qu'une seule couleur, le canal rouge est ainsi sensible au Rouge et Infrarouge via un premier photosite, le canal vert est sensible au Vert et Infrarouge via un second photosite, le canal bleu est sensible au Bleu et Infrarouge via un troisième photosite, et le canal proche infrarouge PIR est sensible à l'Infrarouge via un quatrième photosite, la première bande passante couvrant notamment les longueurs d'onde inférieures à 650 nm.

Quel que soit le capteur 14, la seconde bande passante du filtre 12 est configurée pour laisser passer les longueurs d'onde infrarouge, par exemple la seconde bande passante s'étend de 790 à 875 nm, et préférentiellement s'étend à partir de 760 nm-800 nm, de manière à récupérer du signal infrarouge suffisant même en cas de présence de film anti-chaleur, ce type de film coupant les longueurs d'onde autour de 800nm, tout en ne nécessitant qu'un sensible surdimensionne-ment de l'éclairage infrarouge.

Le dispositif d'acquisition ne comprend aucun filtre infrarouge (appelé en anglais Infrared Cut), il est donc sensible aux infrarouges sur tous ses canaux.

Le dispositif d'acquisition 1 avec un capteur 14 composé uniquement de trois photosites est notamment obtenu à partir d'un dispositif d'acquisition constitué par exemple d'une caméra Rouge Vert Bleu RVB conventionnelle de laquelle on aura ôté le filtre infrarouge et dans laquelle le réseau de filtres couleur est remplacé par un filtre conçu pour ne laisser passer que le rouge, le vert et l'infrarouge IR. Le dispositif 1 obtenu est alors nommé RVPIR pour Rouge Vert Proche Infrarouge.

Le dispositif d'acquisition 1 avec un capteur 14 composé d'au moins quatre photosites est par exemple obtenu à partir d'une caméra Rouge Vert Bleu et proche Infrarouge RVBPIR associée à un filtre double bande passante, également appelé filtre notch, passant dans tout le visible, c'est-à-dire notamment entre 400 nm et 650 nm, et passant dans l'infrarouge, c'est-à-dire notamment entre 800 nm et 875 nm, et bloquant le reste. Le dispositif 1 obtenu est alors nommé RVBPIR pour Rouge Vert Bleu Proche Infrarouge. La différence par rapport au dispositif d'acquisition 1 précédent avec un capteur 14 composé uniquement de trois photosites est qu'il laisse passer le bleu (entre 400 nm et 530 nm) au lieu de le couper.

Le dispositif d'acquisition 1 comprend également un module de traitement 16. Le module de traitement 16 reçoit en entrée une image brute $I_B$ (« Raw image » en anglais) en provenance du capteur 14 et génère une image infrarouge $I_{IR}$ et une image couleur $I_{VIS}$. Une image brute est constituée de l'information photonique obtenue, après la conversion par les photosites des photons incidents en un signal électrique numérisé.

En cas de capteur 14 à uniquement trois photosites, le module de traitement 16 est configuré pour calibrer, en déterminant des paramètres de calibration, de manière connue, le dispositif d'acquisition d'image 1.

De même, en cas de capteur 14 à au moins quatre photosites, le dispositif 1 d'image 1est calibré de manière connue.

Le module de traitement 16 est également configuré pour générer une image infrarouge $I_{IR}$ et une image couleur $I_{VIS}$ à partir d'une image brute $I_B$ acquise par le capteur 14 et des paramètres de calibration déterminés. Le module de traitement 16 est donc apte à mettre en œuvre le procédé de génération des images $I_{IR}$ et $I_{VIS}$. Avantageusement, le module de traitement 16 génère des images $I_{IR}$ et $I_{VIS}$ qui sont synchronisées.

Le dispositif d'acquisition 1 peut comprendre d'autres éléments bien connus des caméras RVB conventionnelles. Ces éléments ne sont pas représentés sur la Fig. l. Les éléments de l'objectif 10 peuvent contenir des traitements optiques de type antireflet pour augmenter le rapport signal-à-bruit dans les images acquises. Le dispositif d'acquisition 1 comprend généralement un réseau de mi-crolentilles positionné au-dessus du capteur 14 dont le rôle est d'optimiser la collecte de la lumière par les photosites. Le dispositif d'acquisition 1 comprend également un module de traitement du signal (non représenté sur la Fig. l) en sortie du capteur 14. Son rôle est de reconstituer, pixel par pixel, les deux informations colorées manquantes, via un algorithme de « dématriçage ». Le document de Alleyson et al intitulé « Linear demosaicing inspired by the human visual system » publié en avril 2005 dans IEEE Transactions on Image Processing 14 (4), 439-449 est un exemple d'un tel algorithme.

Le module de traitement du signal et le module de traitement 16 peuvent être intégrés dans un seul et même module ou bien être des modules distincts.

Le dispositif d'acquisition 1 permet avantageusement d'obtenir des images couleur $I_{VIS}$ ayant une bonne résolution de la composante verte ce qui est important notamment pour les algorithmes opérant sur des images de peau, tels les algorithmes de reconnaissance de visage. Le dispositif d'acquisition 1 permet en même temps d'obtenir des images infrarouges $I_{IR}$.

Le système 100 d'acquisition comprend ici deux sources artificielles 20,30 de lumière éclairant ladite scène, la première source artificielle 20 de lumière émettant un signal lumineux dans l'infrarouge et la seconde source artificielle 30 de lumière émettant un signal lumineux dans le visible.

Lesdites sources artificielles 20,30 sont positionnées de manière à éclairer la scène, et notamment l'objet 150, ici une partie corporelle, représentée sous la forme d'un visage.

La première source artificielle 20 de lumière infrarouge est dimensionnée pour permettre d'avoir sur le capteur 14 un signal pouvant être équivalent au signal généré par une lumière visible très forte, par exemple d'environ 1000 lux. L'éclairage infrarouge peut donc être piloté de manière à être modulé en intensité entre zéro et l'équivalent d'environ 1000 lux. Cette première source artificielle 20 de lumière infrarouge consiste par exemple en une ou plusieurs diodes électroluminescentes LED à 850 nm, dont le spectre s'étend approximativement de 800 à 875nm.

La seconde source artificielle 30 de lumière visible, appelée également source d'éclairage blanc, est dimensionnée pour permettre d'avoir un signal suffisant dans le noir complet sans générer d'éblouissement de l'utilisateur, elle génère un éclairement de par exemple 50 à 100 lux à la distance d'utilisation d'environ 70 cm.

La Figure 2 illustre schématiquement un exemple d'architecture matérielle du module de traitement 16. Le module de traitement 16 comprend alors, reliés par un bus de communication 160 ; un processeur ou CPU (« Central Processing Unit » en anglais) 161 ; une mémoire vive ; RAM (« Random Access Memory » en anglais) 162; une mémoire morte ROM (« Read Only Memory » en anglais) 163; au moins une interface de communication 165 permettant par exemple au module de traitement 16 de communiquer avec le capteur 14 du dispositif d'acquisition 1. Optionnellement, le module de traitement 16 comprend une unité de stockage 164 telle qu'un disque dur ou un lecteur de support de stockage, tel qu'un lecteur de cartes SD (« Secure Digital » en anglais).

Le processeur 161 est capable d'exécuter des instructions chargées dans la RAM 162 à partir de la ROM 163, d'une mémoire externe (non représentée), d'un support de stockage (tel qu'une carte SD), ou d'un réseau de communication. Lorsque le module de traitement 16 est mis sous tension, le processeur 161 est capable de lire de la RAM 162 des instructions et de les exécuter. Ces instructions forment un programme d'ordinateur causant la mise en œuvre, par le processeur 161, des procédés décrits en relation avec les figures suivantes.

Préférentiellement le module 16 est d'architecture centralisée, mais il peut également être implémenté sous forme d'une architecture distribuée, aussi bien en terme de donnée ou de composant, matériel ou logiciel, notamment dans le cas de ressource informatique dématérialisée.

Les procédés décrits en relation avec les figures suivantes peuvent être implé-mentés sous forme logicielle par exécution d'un ensemble d'instructions par une machine programmable, par exemple un DSP (« Digital Signal Processor » en anglais),un microcontrôleur ou un GPU (processeur graphique, « Graphics Processing Unit » en terminologie anglo-saxonne), ou être implémenté sous forme matérielle par une machine ou un composant dédié, par exemple un FPGA («Field-Programmable Gate Array » en anglais) ou un ASIC ( «Application-Specific Integrated Circuit » en anglais).

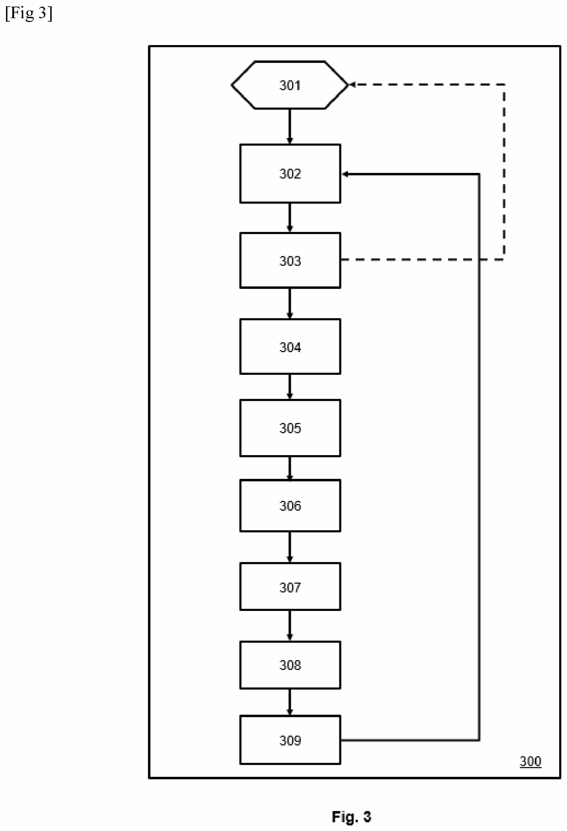

La figure 3 illustre un procédé d'acquisition d'une image infrarouge et d'une image couleur selon un mode de réalisation appliqué à un système 100 d'acquisition comprenant notamment un capteur 14 comportant uniquement trois photosites ainsi qu'une source 20 de lumière infrarouge et une source 30 de lumière visible. Il convient néanmoins de noter que dans un autre mode de réalisation le système pourrait ne pas comporter de source 30 de lumière visible, la source 20 de lumière infrarouge étant dans ce cas la seule pilotée selon le procédé, par exemple dans le cas d'un système d'acquisition dont les conditions d'usage excluent le noir complet.

La première étape ici représentée du procédé 300 d'acquisition est une étape d'initialisation 301 fixant les paramètres d'exposition, tel que gain et/ou temps d'exposition, et des paramètres d'intensité de l'au moins une source de lumière artificielle du système 100 d'acquisition, à des valeurs prédéterminées.

Préférentiellement l'étape 301 d'initialisation comporte également une sous-étape de détermination des niveaux logiques (en anglais « digital level ») cibles de signal infrarouge et visible, ainsi qu'une répartition cible prédéterminée desdits signaux : $C_{IR}/C_{visible}$, néanmoins cette sous-étape pourrait faire partie d'une autre étape du procédé 300, par exemple l'étape 306 de comparaison. $C_{visible}$ et $C_{IR}$ sont les niveaux logiques cibles auxquels on souhaite asservir le signal respectivement dans l'image visible et l'image infrarouge. Ces niveaux logiques sont déterminés en fonction de l'utilisation des images, notamment en fonction des besoins des algorithmes notamment biométriques (reconnaissance, et détection de fraude). Sachant que sur les photosites du capteur 14, les canaux visibles sont également sensibles à l'infrarouge, la somme de ces deux consignes doit nécessairement être inférieure au niveau logique maximal $N_{max}$ qui peut être restitué par chaque photosite, par exemple $N_{max}=1023$ dans le cas d'un dispositif 1 d'acquisition avec une sortie 10 bits. Pour ne pas travailler avec des images proches de la saturation, il convient de conserver une marge suffisante. Par exemple, ces niveaux logiques cibles sont ainsi déterminés de manière à ce que : $C_{IR} + C_{visible} < N_{max}/2$.

Par exemple $C_{visible} = 120$ et $C_{IR}=240$ (pour des images 10 bits, signal divisé sur 1024 canaux allant du niveau logique 0 à 1023), sachant que ces valeurs sont ici dimensionnées par rapport à de la faible lumière, c'est-à-dire ici avec un gain de 4, configuré ici comme étant le gain maximal de manière à limiter le bruit sur l'image, car si on a plus de lumière ces cibles ne seront pas nécessairement atteintes mais la qualité d'images sera suffisante. Il en résulte une répartition cible prédéterminée desdits signaux, ladite répartition cible étant ici $C_{IR}/C_{visible}$ :le rapport du niveau logique infrarouge sur niveau logique visible.

Une fois l'étape d'initialisation achevée, le procédé 300 d'acquisition d'une image couleur et d'une image infrarouge d'une scène se déroule sur la base desdits paramètres d'exposition.

L'étape 302 de réception d'une image acquise à partir du dispositif 1 d'acquisition d'image sensible aux longueurs d'onde visibles et infrarouge. L'image est acquise avec les paramètres définis à l'itération précédente, à savoir : temps d'exposition du capteur 14, gain du capteur 14, intensité de la source 20 d'éclairage infrarouge, intensité de la source 30 d'éclairage blanc. Pour garantir la bonne association entre l'image et ces paramètres, ils sont notamment mémorisés sous forme de métadonnées associées à l'image acquise si bien que lors de la réception de l'image, ces métadonnées sont incluses dans le transfert de l'image. Cette association peut alternativement être réalisée au moyen de la solution présentée dans la demande de brevet FR2212301.

L'étape de traitement de ladite image reçue comporte elle-même plusieurs étapes. Le traitement sépare l'image infrarouge et l'image visible et définit au moins un signal à asservir et une consigne d'asservissement afférente, ladite au moins une consigne d'asservissement étant une consigne d'asservissement de signal infrarouge et/ou visible en fonction de laquelle est pilotée au moins une source artificielle de lumière infrarouge et/ou visible. Le traitement est mis en œuvre par le module de traitement 16 du système 100 d'acquisition.

Plus précisément, l'étape de traitement comporte une étape 303 de détection d'un objet dans l'image et de détermination de distance d entre l'objet détecté et ledit dispositif d'acquisition 1. La détection des objets dans l'image est par exemple réalisée de manière connue au moyen d'un algorithme d'intelligence artificielle ou par un réseau de neurone, tel que décrit par exemple dans l'article « You only look once: Unified, real-time object detection », de Redmon, J., Divvala, S., Girshick, R., & Farhadi, A. (2016), Proceedings of the IEEE conference on computer vision and pattern recognition (p. 779-788). L'objet 150 recherché est par exemple ici un visage, et le choix du visage d'intérêt est par exemple le visage le plus proche. On définit une région d'intérêt ROI, par exemple rectangulaire, correspondant au visage choisi. L'image utilisée pour la mise en œuvre de cette étape 303 de détection et de détermination de distance est préférentiellement l'image brute $I_B$ (composite) ou l'image couleur $I_{vis}$, mais il pourrait également s'agir de l'image infrarouge $I_{IR}$.

On estime également la distance d du visage 150 au dispositif, par exemple en fonction de la taille de l'objet sur l'image en pixels, et connaissant les caractéristiques intrinsèques de la caméra (focale et taille de pixel notamment, qui sont des paramètres connus, voire peuvent également faire partie des métadonnées associées à l'image lors de son acquisition). Cette estimation de distance d est approximative mais suffisante, une autre méthode d'estimation de la distance d plus précise sera définie ultérieurement.

Préférentiellement, en cas d'absence de détection d'objet dans la première image reçue, un rebouclage représenté en trait pointillé est effectué vers l'étape d'initialisation 301 qui effectue un balayage itératif de configurations avec acquisition et analyse d'image jusqu'à la détection de l'objet recherché dans l'image acquise. Chaque configuration comprend lesdits paramètres d'exposition, tel que gain et/ou temps d'exposition, et des paramètres d'intensité (exprimée dans le tableau ci-dessous en rapport cyclique, allant de 0 à 1) de l'au moins une source de lumière artificielle, les valeurs desdits paramètres sont fixées à des valeurs prédéterminées dans chaque configuration.

Ainsi, si l'objet recherché est un visage, le but est de fournir des images permettant de détecter un éventuel visage dès que possible, et ce quelles que soient les conditions lumineuses ambiantes, et notamment les contre jours pour lesquels un simple contrôle automatique du gain basé sur la moyenne de l'image complète ou une région fixe ne suffirait pas. Un mode d'initialisation est ici défini en fonction de l'objet recherché, ainsi en mode visage, on configure le système d'acquisition avec un ensemble de paramètres optimisés pour la détection du visage dans une condition lumineuse donnée, et à chaque image successive, on modifiera les paramètres pour s'adapter à diverses conditions, et ce jusqu'à ce qu'un visage soit détecté sur l'une des images.

L'ensemble des configurations peut être regroupé dans une table, par exemple :

[Table 1]

| Ensemble de paramètres N° | Temps d'exposition | Gain | Intensité infrarouge | Intensité lumière blanche |
|---|---|---|---|---|
| 1 | 0,000625 s | 1 | 0 | 0 |
| 2 | 0,01 s | 1 | 0 | 0 |
| 3 | 0,02 s | 3 | 0,1 | 0 |

Par exemple la configuration 1 permet de détecter un visage avec un éclairement très fort, en cas d'éclairage direct par le soleil par exemple ;

La configuration 2 permet de détecter un visage avec un éclairement intermédiaire, en cas d'éclairage indirect par le soleil ou d'éclairage artificiel ambiant fort (c'est-à-dire non émis par les sources artificielles du système) par exemple ;
La configuration 3 permet de détecter un visage avec un éclairement faible ou dans le noir complet. A cet effet, dans cette configuration on allume la source 20 l'éclairage infrarouge à un niveau permettant d'avoir le signal nécessaire.

On enchaine l'acquisition d'une image avec la configuration 1, puis une autre avec la configuration 2, puis une autre avec la configuration 3, puis on recommence à la configuration 1, jusqu'à détection d'un visage. Si l'objet recherché est par exemple un code visuel, alors l'ensemble des configurations sera différent, adapté au mode code visuel.

Puis une fois l'objet détecté on poursuit le procédé 300 par la phase d'optimisation du traitement à partir de l'objet 150 détecté. Dans certains cas il se peut qu'il n'y ait temporairement aucun objet dans le volume de capture, ce qui se traduit par une absence de détection lors de l'étape 303 et dans ce cas, le système 100 peut par exemple figer ses paramètres jusqu'à la prochaine détection, et par exemple après un seuil de temps donné (1 seconde par exemple) reboucler vers l'étape d'initialisation avec balayage de configurations.

L'étape de traitement comporte l'étape 304 de calcul d'au moins deux métriques sur tout ou partie de l'image, la première métrique caractérisant le signal infrarouge, la deuxième métrique caractérisant le signal visible. Ladite partie de l'image est notamment la région d'intérêt ROI de l'image délimitant ledit objet détecté, ledit objet étant notamment une partie corporelle, telle qu'un visage, ou une information, telle qu'un code visuel (e.g. Quick Response Code, Machine Readable Zone), notamment imprimée sur papier ou affichée sur une liseuse avec la technologie « e-ink ».

Chaque métrique peut être au minimum la moyenne sur la partie de l'image correspondant à la ROI, sur chaque canal de longueur d'onde. Par exemple prenons $S_{IR}$ moyenne du canal infrarouge, et $S_{visible}$ moyenne du canal visible. Dans le cas illustré ici de dispositif 1 RVPIR avec capteur 14 à uniquement trois photosites le signal visible comporte 2 composantes, rouge et vert et on peut prendre par exemple : $S_{visible} = \max(S_{rouge}, S_{vert})$. Dans le cas d'un dispositif 1 RVBPIR avec capteur 14 à quatre photosites, on prendrait par exemple : $S_{visible} = \max(S_{rouge}, S_{vert}, S_{bleu})$.

En cas d'objectif à agrandissement, une fois la détection de l'objet 150 dans la première image effectuée, une seconde image peut être acquise avec un agrandissement de manière à ce que la totalité de la seconde image corresponde à la ROI de la première image, cette mise en œuvre est néanmoins délicate en cas de personne en mouvement car le déplacement de l'objet doit également être pris en compte.

On procède ensuite à une étape 305 d'estimation du niveau logique du signal dû à l'infrarouge ambiant. Pour ce faire, on exécute une étape d'estimation d'une composante $S_{IRambiant}$ de la première métrique $S_{IR}$ caractérisant une quantité de signal infrarouge due à l'infrarouge ambiant, c'est-à-dire non émis par les sources 20,30 du système 100. En effet, la première métrique $S_{IR}$ caractérisant le signal infrarouge est basée sur une estimation du niveau logique du signal dû à l'infrarouge présent et sachant que le signal infrarouge sur l'image est la somme du signal dû à l'éclairage infrarouge ambiant extérieur au produit, et du signal dû à l'éclairement infrarouge émis par le système, on obtient :

- Calcul du signal additionnel $S_{IRadditionnel}$ produit par la source 20 d'éclairage infrarouge $S_{IRadditionnel} = \frac{R_{IR}.DC_{IR}.T_{expo}.Gain}{d^2}$ avec d la distance à l'objet 150 précédemment estimée à l'étape 303, $T_{expo}$ et *Gain :* le temps d'exposition (en seconde) et le gain (sans unité) appliqués lors de l'acquisition de l'image, et $R_{IR}$ le paramètre du système caractérisant une sensibilité de la chaine optique (m²/s) et $DC_{IR}$ le rapport cyclique (en anglais Duty Cycle) courant de la source 20 d'éclairage infrarouge (sans unité, entre 0 et 1);

- Calcul du signal infrarouge ambiant $S_{IRambiant}$ c'est-à-dire non émis par l'au moins une source artificielle 20,30 de lumière infrarouge et/ou visible (sachant que la source 30 de lumière visible n'émet pas dans l'infrarouge) :

$$S_{IRambiant} = S_{IR} - S_{IRadditionnel} .$$

Puis a lieu une étape de calcul (non représentée) de répartition d'éclairage ambiant, notamment sous la forme du ratio $\frac{S_{IR\,ambiant}}{S_{visible}}$ de quantité de la composante de la première métrique caractérisant le signal infrarouge due à l'infrarouge ambiant sur la deuxième métrique.

On procède ensuite à l'étape 306 de comparaison de ladite répartition d'éclairage ambiant $\frac{S_{IR\,ambiant}}{S_{visible}}$ à ladite répartition cible prédéterminée $\frac{C_{IR}}{C_{visible}}$ lors de l'étape 301 d'initialisation, et la consigne d'asservissement du signal infrarouge est fonction de ladite comparaison, et notamment en ce que la consigne d'asservissement du signal visible est fonction de ladite comparaison.

En effet, en fonction de ladite comparaison, on décide si on va chercher à asservir le signal visible de la source 30 ou plutôt le signal infrarouge de la source 20 :

- Si $\frac{S_{IR\,ambiant}}{S_{visible}} < \frac{C_{IR}}{C_{visible}}$ alors on est dans le cas nominal où il y a moins d'infra-rouge que de visible. Dans ce cas, on va asservir le signal visible sur le niveau logique cible visible prédéterminé, devenant la consigne visible ;
- Dans le cas contraire, il y a plus d'infrarouge que de visible, on asservit alors le signal infrarouge sur la consigne infrarouge.

Dans la suite, on définit S le signal qu'on va asservir, qui est égal à $S_{IRambiant}$ ou $S_{visible}$ selon le critère ainsi défini, et C la consigne à laquelle on va l'asservir, c'est-à-dire respectivement les niveaux logiques $C_{IR}$ ou $C_{visible}$ en fonction du même critère.

Parfois une consigne peut déjà être atteinte, notamment de manière intrinsèque en fonction de la proximité du lieu à une fenêtre par exemple.

Enfin, l'étape de traitement comporte :

- une étape 307 de calcul des paramètres d'exposition du dispositif 1 d'acquisition à appliquer, tel que gain et/ou temps d'exposition, notamment en fonction du rapport de l'au moins une consigne d'asservissement sur ledit signal à asservir afférent, pour atteindre ladite au moins une consigne d'asservissement;
- une étape 308 de calcul de la commande de pilotage de la source artificielle de lumière infrarouge ;
- une étape 309 de calcul de la commande de pilotage de la source artificielle de lumière blanche, c'est-à-dire visible.

Plus précisément, dans l'étape 307 de calcul des nouveaux paramètres d'exposition :

◦ On corrige éventuellement S par une loi non linéaire (typiquement un polynôme, par exemple de degré 3) permettant prendre en compte et compenser l'éventuelle saturation du signal, cette valeur corrigée est nommée S'.
 ◦ On calcule le ratio Ratio=C/S' qui correspond au gain qu'il faut appliquer à l'image analysée pour atteindre la cible ;
 ◦ On restreint Ratio entre une borne supérieure ratio_min, fixée par exemple à 0,1 et une borne supérieure ratio_max, fixée par exemple à 10 ;
 ◦ On en déduit le nouveau produit E = $T_{expo}$.Gain.Ratio.
 ◦ Il s'agit alors de répartir Texpo' et Gain' de manière à avoir $T_{expo}$'.Gain' = E, en suivant une stratégie d'optimisation du gain ou du temps d'expo, qui est dépendante des performances recherchées (en termes de flou de bougé et de bruit notamment). En effet, temps d'exposition et gain agissent de manière proportionnelle sur l'image, il en résulte une synergie et leur détermination repose alors sur un compromis, car l'allongement du temps d'exposition peut créer un flou de bouger (un flou de bouger maximal pouvant être défini en fonction de l'application et de l'algorithme associé) alors que l'augmentation du gain engendre un accroissement du bruit.

> ■ Par exemple on détermine d'abord le temps d'exposition $T_{expo}$' aussi grand que possible en restant inférieur à E, dans la limite d'un temps d'exposition maximal (par exemple 20ms ou 40 ms), et on déduit ensuite Gain'=E/$T_{expo}$' ;
> ■ On peut également avantageusement privilégier des temps d'exposition qui sont des multiples de la période de l'éclairage ambiant (par exemple 10 ms en Europe et 8,33 ms aux Etats-Unis d'Amérique) pour éviter des effets de scintillement dûs à des éclairages non continus ;
> ■ On peut aussi éviter de mettre à jour ces paramètres de configuration du capteur 14 dans le cas où la variation par rapport à l'image précédente serait très faible (par exemple variation <10%), ce qui permet d'avoir une image plus stable en luminosité. En effet les mesures étant bruitées, les petites variations peuvent être dûes à un bruit de mesure (par exemple sur l'estimation de la distance) plus qu'à une vraie variation de luminosité ambiante.

Plus précisément, lors de l'étape 308 de calcul de la commande de pilotage de la source 20 artificielle de lumière infrarouge, on calcule d'abord le signal $S'_{IRadditionnel}$ infrarouge additionnel souhaité sur la prochaine image à partir de la consigne infrarouge cible $C_{IR}$ (niveau logique cible infrarouge), et du signal infrarouge ambiant $S'_{IR\,ambiant}$ qu'on anticipe sur la prochaine image, connaissant le signal infrarouge ambiant actuel $S_{IR\,ambiant}$ et le ratio *Ratio* qu'on va appliquer sur l'exposition du dispositif 1 :

$$S'_{IR\,ambiant} = Ratio.S_{IR\,ambiant} \qquad ,$$

ce qui donne

$$S'_{IR\,additionnel} = C_{IR} - Ratio.S_{IR\,ambiant}$$

Puis on calcule le nouveau rapport cyclique $DC'_{IR}$ pour l'éclairage infrarouge selon :

$$DC'_{IR} = \frac{S'_{IR\,additionnel}.d^2}{R_{IR}.T'_{expo}.Gain'}$$

Lors de l'étape 309 de calcul de la commande de pilotage de la source 30 artificielle de lumière blanche, étant donné le niveau de qualité souhaité en terme de bruit sur l'image pour l'exploitation des images visibles, et sachant que le bruit augmente avec le gain du dispositif 1 (à niveau de signal de sortie donné), il est nécessaire de ne pas dépasser un certain gain du dispositif 1.

Ici, la commande de la source 30 artificielle de lumière blanche est binaire, en tout ou rien, c'est à dire allumée ou éteinte, pour des raisons de simplification, mais son intensité pourrait en variante être modulée. Ainsi,

- si la source 30 d'éclairage blanc était éteinte et que $T_{expo}$'.Gain' ≥ $Seuil_{allu\text{-}mage}$ alors on allume la source 30 d'éclairage blanc, avec par exemple le seuil d'allumage $Seuil_{allumage}$ = 4 x 0,02 (gain de 4 et temps d'exposition de 20 ms) ;
- si la source 30 d'éclairage blanc était allumée et que $T_{expo}$'.Gain'<$Seuil_{ex\text{-}tinction}$ alors on éteint l'éclairage blanc, le seuil d'extinction $Seuil_{extinction}$ étant choisi de manière à ce que l'allumage de l'éclairage blanc sur l'objet observé ne provoque pas une chute du gain suffisante pour passer à l'itération suivante, c'est-à-dire à l'acquisition d'image suivante, sous le seuil d'extinction, ce qui provoquerait un clignotement et une instabilité du système, par exemple Seuil$_{extinction}$ = 1 x 0,02 (gain de 1 et temps d'exposition de 20 ms), avec un éclairage générant environ 50 lux sur l'objet.

A partir du moment où l'éclairage s'allume, on peut également avantageusement ne pas l'éteindre avant qu'une certaine durée s'écoule, afin d'éviter un inconfort pour l'utilisateur.

Préférentiellement, les deux commandes de pilotage de la source 20 artificielle de lumière infrarouge et de la source 30 artificielle de lumière blanche, sont définies à chaque itération.

Dans la description ci-dessus du procédé 300 d'acquisition, seule la valeur du signal infrarouge ambiant, c'est-à-dire non émis par la source artificielle 20 de lumière infrarouge ni par la source artificielle de lumière 30 visible du système 100, est calculée car on privilégie la modulation du signal infrarouge par rapport à la modulation du signal visible de manière à éviter l'allumage de la source 30 d'éclairage visible.

Néanmoins, on pourrait également calculer la valeur du signal visible ambiant S$_{visible\ ambiant}$ non émis par les sources 20,30 du système 100 (notamment 30 ici car la source 20 ne génère intrinsèquement que de l'infrarouge) et calculer le signal additionnel S$_{visible\ additionnel}$ produit par la source 30 d' éclairage de manière à éviter la déviation lors de l'extinction de la source 30 de lumière visible et le temps de reconvergence afférent.

Ce procédé 300 d'acquisition par contrôle itératif permet de:

a. optimiser le temps d'exposition et le gain du capteur, en fonction de l'éclairement ambiant visible pour atteindre un niveau cible C$_{visible}$ sur l'image visible

b. ajuster en continu l'intensité de l'éclairage infrarouge pour que l'image infra-rouge atteigne une cible C$_{IR}$ déterminée (en complément de la composante infrarouge déjà présente dans l'éclairage ambiant)

c. piloter l'allumage de la source 30 de lumière visible (ici en tout ou rien) dans le cas où il détecte un manque de lumière visible, et piloter son extinction lorsque l'éclairage visible redevient suffisant.

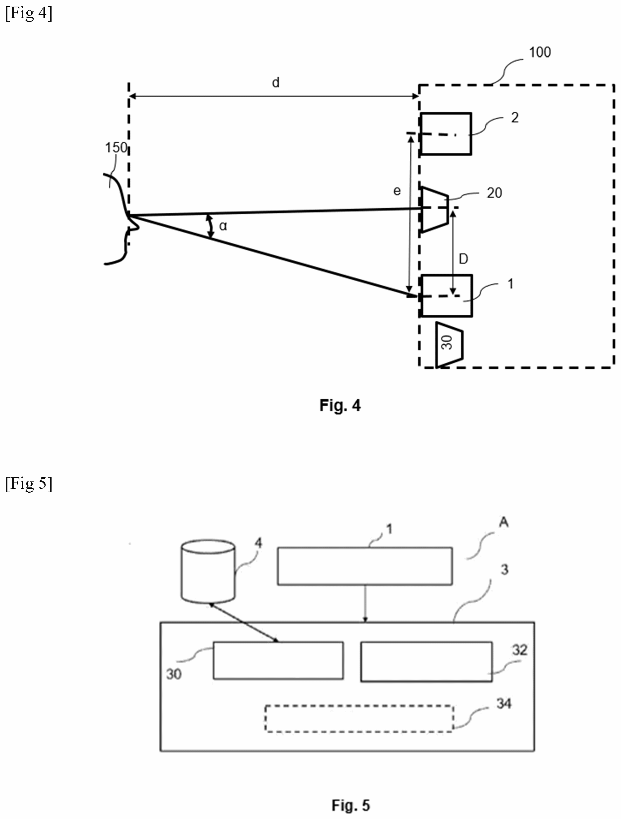

La figure 4 illustre schématiquement un système d'acquisition d'image selon un autre mode de réalisation de l'invention. En effet, le système 100 d'acquisition comporte ici non seulement le dispositif d'acquisition 1 duquel provient une image I$_{vis}$ visible et une image I$_{IR}$ infrarouge mais comporte également un autre dispositif 2 d'acquisition d'image visible, cet autre dispositif est uniquement sensible au visible, telle une caméra RVB, fonctionnant en même temps que le dispositif 1 d'acquisition d'image RVPIR.

Les paramètres d'exposition de cet autre dispositif 2 : temps d'exposition et gain sont alors contrôlés selon un algorithme indépendant du dispositif 1 d'acquisition d'image RVPIR.

L'image acquise par cet autre dispositif 2 est notamment utilisée pour fournir un retour vidéo à l'utilisateur et pour la reconnaissance biométrique.

En outre, par couplage de cette image avec l'image visible du dispositif 1 d'acquisition d'image RVPIR, cela permet de détecter des fraudes planes par stéréoscopie. On obtient un modèle 3D de l'objet visé. Ce modèle 3D est utilisé pour détecter les fraudes planes, ou dont la forme globale n'approche pas correctement celle d'un visage. L'espacement e entre les deux dispositifs 1,2 est d'environ 16 cm ce qui permet de détecter des fraudes planes jusque 90 cm environ.

Il est alors intéressant de positionner la source 20 d'éclairage infrarouge avec un angle α supérieur à 5° par rapport au dispositif 1 d'acquisition d'image RVPIR , vu du visage 150. L'intérêt est de ne pas générer un effet "yeux rouges" (en anglais "bright pupil") qui serait dépendant de la distance de la personne, et introduirait de la variabilité dans les images, et donc diminuerait les performances de la détection de fraude. Etant donné ici la profondeur des volumes de capture (distance d de l'ordre de 40-90 cm environ) cela implique une distance D de 6.5 cm à 7.5 cm entre le dispositif 1 d'acquisition d'image RVPIR et la source 20 d'éclairage infrarouge.

Avantageusement, on traite le canal infrarouge IR, ou l'ensemble des canaux de la seconde caméra, par intelligence artificielle, afin de détecter les fraudes type masque 3D.

La combinaison de ces traitements permet de détecter des fraudes de tous types, et d'assurer la reconnaissance biométrique, dans toutes les conditions lumineuses.

La stéréoscopie permet également de déterminer la distance d de manière précise.

Le module de traitement 16 communique alors notamment via son interface de communication 165 avec les caméras des deux dispositifs 1,2.

La figure 5 illustre un dispositif d'authentification A selon un mode de réalisation. Le dispositif d'authentification A d'une partie corporelle comprend un système d'acquisition d'image tel que le système d'acquisition 1 décrit en référence à la figure l et un module d'analyse d'image 3.

Le module de traitement d'image 3 comprend un module 30 de reconnaissance de partie corporelle, telle qu'un visage, un module 32 de détection de fraude. Il peut comprendre optionnellement un module 34 d'activation d'accès à un lieu, e.g. un bâtiment, une salle, etc.

Le module 30 de reconnaissance de partie corporelle est relié à une base de données 4. La base de données 4 peut faire partie du dispositif d'authentification A ou bien être externe à celui-ci. La base de données stocke des images ou descripteurs d'images des parties corporelles de personnes autorisées, e.g. de personnes autorisées à accéder à un bâtiment.

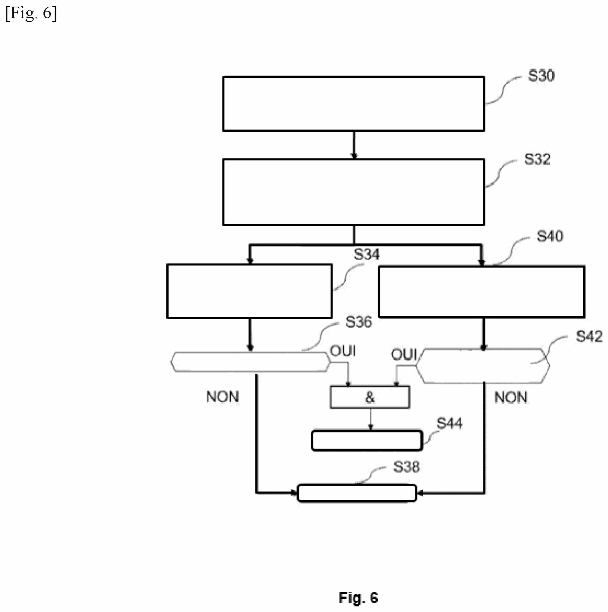

La figure 6 illustre un procédé d'authentification tel que mis en œuvre par le dispositif A d'authentification de la figure 4.

L'utilisateur souhaitant être authentifié présente son visage devant le système 1 d'acquisition d'image.

Lors d'une étape S30, une image brute d'un visage 150 éclairé par une lumière infrarouge et visible est obtenue par le système d'acquisition 1.

Lors d'une étape S32, une image couleur $I_{vis}$ et une image infra-rouge $I_{IR}$ sont obtenues à partir des paramètres de configuration optimisés du système d'acquisition 1. Des algorithmes connus de dématriçage peuvent être appliqués pour obtenir les valeurs manquantes de chaque pixel. Un tel algorithme permet d'obtenir pour chaque pixel de l'image couleur une valeur R et une valeur V et pour chaque pixel de l'image infrarouge une valeur IR.

Lors d'une étape S34, un algorithme de reconnaissance de visage est appliqué. Par exemple, l'image couleur $I_{vis}$ obtenue est traitée, e.g. segmentée, pour extraire un visage. Le visage extrait est ensuite comparé avec les images de visage ou leurs descripteurs stockés dans la base de données 4. Si le visage extrait est proche au sens d'une certaine métrique d'un visage de la base de données 4 alors le visage extrait est reconnu, sinon le visage est inconnu. Dans une variante, l'algorithme de reconnaissance de visage utilise l'image couleur $I_{vis}$ et l'image infrarouge $I_{IR}$. Dans le cas S36 où le visage est inconnu, l'accès est refusé à l'étape S38.

Lors d'une étape S40, un algorithme de détection de fraude est appliqué. A cet effet, l'image infrarouge $I_{IR}$ est utilisée. Dans une variante, l'image infra-rouge $I_{IR}$ et l'image couleur $I_{vis}$ sont utilisées. Un réseau de neurones peut être utilisé à cet effet.

Dans le cas S42 où une fraude est détectée, i.e. que le visage n'est pas authentique (e.g. utilisation d'un masque), l'accès est refusé à l'étape S38.

L'accès est validé lors d'une étape S44 uniquement dans le cas où le visage 150 est reconnu et authentifié.

Dans un mode particulier de réalisation, une image i' est générée en concaté-nant les images $I_{IR}$ et $I_{vis}$. A cet effet, un procédé de dématriçage est appliqué sur les images $I_{IR}$ et $I_{vis}$, i.e. après correction par les paramètres de calibration. L'image I' a donc 3 composantes R, V et IR. Cette image I' est ensuite utilisée lors des étapes S34 et S40 par des algorithmes de reconnaissance de visage et de détection de fraude. Ces algorithmes peuvent utiliser des réseaux de neurones convolutifs ayant appris leurs coefficients sur des images du type de l'image I'. A cet effet, des réseaux de type resnet peuvent être utilisés. De tels réseaux sont notamment décrits dans le document de He et al. intitulé "Deep residual learning for image recognition" et publié en 2016 dans Proceedings of the IEEE conference on computer vision and pattern recognition (pp. 770-778).

Dans un autre mode de réalisation, l'image couleur $I_{vis}$ avec les deux composantes R et V est colorisée afin de recréer la composante bleue et ainsi obtenir une image I" ayant 3 composantes R, V et B. Le procédé décrit dans le document de Zhang et al. Intitulé « Colorful image colorization » publié dans ECCV en octobre 2016 est un exemple d'un procédé de colorisation basé sur des réseaux de neurones convolutionnels.

Cette solution permet d'appliquer des algorithmes traditionnels de reconnaissance de visage utilisant classiquement des images couleur RVB. L'algorithme décrit dans le document de Parkhi et al. intitulé "Deep face recognition" et publié en Septembre 2015 dans BMVC (Vol. 1, No. 3, p. 6) est un exemple d'un tel algorithme de reconnaissance de visage. L'image I" est utilisée par l'algorithme de reconnaissance de visage lors de S34. L'algorithme de détection de fraude peut utiliser lors de S40 soit uniquement l'image $I_{IR}$, soit l'image $I_{IR}$ et l'image I". A cet effet, l'algorithme décrit dans le document de Agarwal et al intitulé « Face presentation attack with latex masks in multispectral videos » et publié en 2017 dans Proceedings of the IEEE Conference on Computer Vision and Pattern Recognition Workshops (pp. 81-89) peut être utilisé.

La colorisation est notamment utile pour la visualisation ou l'export des images.

Préférentiellement l'intégralité du procédé d'authentification est mise en œuvre par le module 16 de traitement, sachant que ce module peut être centralisé ou non.

## Revendications

1. Système (100) d'acquisition d'une image couleur ($I_{vis}$) et d'une image ($I_{IR}$) infrarouge d'une scène, ledit système d'acquisition comprenant :

    - au moins une source artificielle de lumière éclairant ladite scène, ladite au moins une source comportant une source artificielle (20) de lumière infrarouge émettant un signal lumineux dans l'infrarouge ;
    .- un dispositif (1) d'acquisition d'image, ledit dispositif étant sensible aux longueurs d'onde visibles et infrarouge, comprenant :

- un capteur (14) ;
- un objectif (10) configuré pour focaliser la lumière reçue en entrée du dispositif d'acquisition (1) sur le capteur (14), un filtre (12) passe double bande dont :

- en cas de capteur (14) à au moins quatre photosites différents, la première bande passante du filtre (12) est configurée pour laisser passer des longueurs d'ondes visibles, et en cas de capteur (14) à trois photosites différents, la première bande passante du filtre (12) est configurée de manière à atténuer la composante bleue de la lumière; et
- la seconde bande passante est configurée pour laisser passer les longueurs d'onde infrarouge, ledit filtre (12) passe double bande étant placé devant le capteur (14), et notamment entre l'objectif (10) et ledit capteur (14) ;

- un module (16) de traitement connecté audit dispositif (1) d'acquisition d'image configuré pour séparer, en sortie de capteur (14), l'image infrarouge ($I_{IR}$) et l'image visible ($I_{vis}$) et pour définir au moins un signal à asservir et une consigne (C) d'asservissement afférente, ladite au moins une consigne d'asservissement étant une consigne d'asservissement de signal infrarouge ($C_{IR}$) en fonction de laquelle est pilotée au moins la source (20) artificielle de lumière infrarouge , ledit module de traitement étant configuré pour : calculer (304) au moins deux métriques ($S_{IR}$, $S_{visible}$) sur tout ou partie de l'image, la première métrique ($S_{IR}$) caractérisant le signal infrarouge, la deuxième métrique ($S_{visible}$) caractérisant le signal visible ;

estimer (305) une composante ($S_{IR\ ambiant}$) de la première métrique caractérisant une quantité de signal infrarouge due à l'infrarouge ambiant, c'est-à-dire non émis par l'au moins une source artificielle (20,30) de lumière, et ;

calculer une répartition d'éclairage ambiant ( $\frac{S_{IR\ ambiant}}{S_{visible}}$ ) sous la forme du ratio de quantité de la composante de la première métrique caractérisant le signal infrarouge due à l'infrarouge ambiant de source non artificielle sur la deuxième métrique, et ;

comparer (306) ladite répartition ( $\frac{S_{IR\ ambiant}}{S_{visible}}$ ) à une répartition cible prédéterminée ( $\frac{C_{IR}}{C_{visible}}$ ),

et en ce que la consigne ($C_{visible}$ , $C_{IR}$) d'asservissement est fonction de ladite comparaison.

2. Système (100) d'acquisition selon la revendication précédente **caractérisé en ce que** ladite au moins une source artificielle de lumière comporte une source artificielle (30) de lumière visible émettant un signal lumineux dans le visible et **en ce que** ladite au moins une consigne d'asservissement est une consigne d'asservissement de signal visible ($C_{visible}$) en fonction de laquelle est pilotée la source (30) artificielle de lumière visible.

3. Système (100) d'acquisition selon l'une quelconque des revendications précédentes **caractérisé en ce que** ledit dispositif (1) d'acquisition d'image comprend un filtre (12) double bande passante dont :

- en cas de capteur (14) à au moins quatre photosites différents, la première bande passante du filtre (12) est configurée pour laisser passer des longueurs d'ondes visiblesinférieures à 650 nm, et en cas de capteur (14) à trois photosites différents, la première bande passante du filtre (12) s'étend entre 530 à 650 nm; et
- la seconde bande passante s'étend de 800 à 875 nm.

4. Système (100) d'acquisition selon la revendication précédente **caractérisé en ce que** la seconde bande passante s'étend à partir de 760 nm-800 nm.

5. Système (100) d'acquisition selon l'une quelconque des revendications précédentes **caractérisé en ce que** :

- la source (20) artificielle de lumière émettant dans l'infrarouge est configurée pour émettre, dans une plage de distance d'utilisation, de 40 à 100 cm, un signal équivalent au signal généré par une lumière visible ambiante extérieure intense, à 1000 lux, par exemple une diode électroluminescente à 850 nm, dont le spectre s'étend de 800 à 875nm.

6. Système (100) d'acquisition selon l'une quelconque des revendications 2 à 5 dans lequel-la source (30) artificielle de lumière émettant dans le visible est configurée pour éclairer de manière satisfaisante dans le noir complet, à 50 lux à une distance d'utilisation d'environ 70 cm.

**7.** Système (100) d'acquisition selon l'une quelconque des revendications précédentes **caractérisé en ce qu'**il comporte un autre dispositif (2) de prise de vue uniquement sensible dans le visible, synchronisé sur le dispositif d'acquisition (1) et dont les paramètres d'exposition sont contrôlés indépendamment de ceux du dispositif d'acquisition (1).

**8.** Procédé (300) d'acquisition d'une image couleur ($I_{vis}$) et d'une image infrarouge ($I_{IR}$) d'une scène, ledit procédé d'acquisition comprenant des étapes de :

- réception (302) d'une image ($I_B$) à partir d'un dispositif (1) d'acquisition d'image sensible aux longueurs d'onde visibles et infrarouge;
- traitement de ladite image ($I_B$) reçue séparant l'image infrarouge et l'image visible et définissant au moins un signal à asservir et une consigne d'asservissement afférente, ladite au moins une consigne (C) d'asservissement étant une consigne d'asservissement de signal infrarouge ($C_{IR}$) en fonction de laquelle est pilotée au moins une source artificielle (20) de lumière infrarouge., l'étape de traitement comportant :

une étape (304) de calcul d'au moins deux métriques ($S_{IR}$, $S_{visible}$) sur tout ou partie de l'image, la première métrique ($S_{IR}$) caractérisant le signal infrarouge, la deuxième métrique ($S_{visible}$) caractérisant le signal visible
une étape (305) d'estimation d'une composante ($S_{IR\ ambiant}$) de la première métrique caractérisant une quantité de signal infrarouge due à l'infrarouge ambiant, c'est-à-dire non émis par l'au moins une source artificielle (20,30) de lumière, et ;
une étape de calcul de répartition d'éclairage ambiant ( $\frac{S_{IR\ ambiant}}{S_{visible}}$ ) sous la forme du ratio de quantité de la composante de la première métrique caractérisant le signal infrarouge due à l'infrarouge ambiant de source non artificielle sur la deuxième métrique, et ;
une étape de comparaison (306) de ladite répartition ( $\frac{S_{IR\ ambiant}}{S_{visible}}$ ) à une répartition cible prédéterminée ( $\frac{C_{IR}}{C_{visible}}$ ),
et en ce que la consigne ($C_{IR}$) d'asservissement du signal infrarouge est fonction de ladite comparaison.

**9.** Procédé (300) d'acquisition selon la revendication précédente **caractérisé en ce que** ladite au moins une consigne (C) d'asservissement comporte une consigne ($C_{visible}$) d'asservissement du signal visible en fonction de laquelle est pilotée une source (30) artificielle de lumière visible, et **en ce que** la consigne ($C_{visible}$) d'asservissement du signal visible est fonction de la comparaison.

**10.** Procédé (300) d'acquisition selon l'une quelconque des revendications 8 à 9 dans lequel l'étape de traitement comporte une étape (303) de détection d'un objet (150) dans l'image couleur ou infrarouge et de détermination de distance (d) entre l'objet (150) détecté et ledit dispositif d'acquisition (1).

**11.** Procédé (300) d'acquisition selon la revendication précédente **caractérisé en ce que** ladite partie de l'image est une région d'intérêt de l'image délimitant ledit objet détecté, ledit objet étant notamment une partie corporelle (150) ou une information, telle qu'un code visuel, notamment imprimée sur un document physique.

**12.** Procédé (300) d'acquisition selon l'une quelconque des revendications 8 à 11 **caractérisé en ce que** les au moins deux métriques ($S_{IR}$, $S_{visible}$) sont calculées comme étant au minimum la moyenne sur tout ou ladite partie de l'image sur chaque canal de longueur d'onde dudit signal caractérisé.

**13.** Procédé (300) d'acquisition selon l'une quelconque des revendications 8 à 12 caractérisé en ce que l'étape de traitement comporte :

- une étape (307) de calcul de paramètre d'exposition du dispositif (1) d'acquisition à appliquer, tel que gain et/ou temps d'exposition, en fonction du rapport de l'au moins une consigne ($C_{IR}$, $C_{visible}$) d'asservissement sur ledit signal à asservir afférent, pour atteindre ladite au moins une consigne d'asservissement;
ou
- une étape de calcul (308, 309) de commande de pilotage de la source (20,30) artificielle de lumière infrarouge et/ou visible.

**14.** Procédé (300) d'acquisition selon l'une quelconque des revendications 8 à 13 **caractérisé en ce qu'**il comporte une étape d'initialisation (301) effectuant un balayage itératif de configurations jusqu'à la détection de l'objet, chaque configuration comprenant au moins un paramètre d'exposition, tel que gain ou temps d'exposition, et un paramètre d'intensité de l'au moins une source artificielle de lumière, les valeurs desdits paramètres étant fixées à des valeurs prédéterminées dans chaque configuration.

**15.** Un procédé d'authentification d'une partie corporelle **caractérisé en ce qu'**il comprend:

- acquérir une image couleur ($I_{vis}$) et une image infrarouge ($I_{IR}$) de ladite partie corporelle par le procédé (300) d'acquisition selon l'une des revendications 8 à 14 et **en ce que** l'objet détecté est une partie corporelle (150) ; et
- authentifier la partie corporelle à partir desdites images couleur ($I_{vis}$) et infrarouge ($I_{IR}$).

**16.** Un dispositif (A) d'authentification d'une partie corporelle, comprenant:

- un système (100) d'acquisition d'image selon l'une des revendications 1 à 7 ; et
- le module (16) de traitement étant configuré pour détecter une partie corporelle (150) à partir de l'image reçue et pour effectuer une authentification de ladite partie corporelle détectée à partir desdites images couleur ($I_{vis}$) et infrarouge ($I_{IR}$).

**Patentansprüche**

**1.** System (100) zur Erfassung eines Farbbildes ($I_{vis}$) und eines Infrarotbildes ($I_{IR}$) einer Szene, wobei das Erfassungssystem umfasst

mindestens eine künstliche Lichtquelle, die die Szene beleuchtet, wobei die mindestens eine Quelle eine künstliche Infrarotlichtquelle (20) umfasst, die ein Lichtsignal im Infraroten aussendet;
eine Bilderfassungsvorrichtung (1), wobei die Vorrichtung für sichtbare und infrarote Wellenlängen empfindlich ist, umfassend:

- einen Sensor (14);
- ein Objektiv (10), das konfiguriert ist, um das am Eingang der Erfassungsvorrichtung (1) empfangene Licht auf den Sensor (14) zu fokussieren, ein Doppelbandpassfilter (12), von dem: im Fall eines Sensors (14) mit mindestens vier verschiedenen Photosites, der erste Durchlassbereich des Filters (12) konfiguriert ist, um sichtbare Wellenlängen durchzulassen, und im Fall eines Sensors (14) mit drei verschiedenen Photosites, der erste Durchlassbereich des Filters (12) konfiguriert ist, um die blaue Komponente des Lichts zu dämpfen; und

der zweite Durchlassbereich konfiguriert ist, um Infrarotwellenlängen durchzulassen, wobei das Doppelbandpassfilter (12) vor dem Sensor (14) platziert ist, und insbesondere zwischen dem Objektiv (10) und dem Sensor (14);

- ein Verarbeitungsmodul (16), das mit der Bilderfassungsvorrichtung (1) verbunden ist, konfiguriert, um am Ausgang des Sensors (14) das Infrarotbild ($I_{IR}$) und das sichtbare Bild ($I_{vis}$) zu trennen und um mindestens ein zu regelndes Signal und einen zugehörigen Regelungssollwert (C) zu definieren, wobei der mindestens eine Regelungssollwert ein Infrarotsignal-Regelungssollwert ($C_{IR}$) ist, in Abhängigkeit von welchem zumindest die künstliche Infrarotlichtquelle (20) gesteuert wird, wobei das Verarbeitungsmodul konfiguriert ist, um: mindestens zwei Metriken ($S_{IR}$, $S_{visible}$) über das gesamte oder einen Teil des Bildes zu berechnen (304), wobei die erste Metrik ($S_{IR}$) das Infrarotsignal charakterisiert, die zweite Metrik ($S_{visible}$) das sichtbare Signal charakterisiert; eine Komponente ($S_{IRambiant}$) der ersten Metrik zu schätzen (305), die eine Infrarotsignalmenge charakterisiert, die auf das Umgebungsinfrarot zurückzuführen ist, das heißt nicht von der mindestens einen künstlichen Lichtquelle (20, 30) ausgesendet wird, und; eine Umgebungsbeleuchtungsverteilung ($\frac{S_{IRambiant}}{S_{visible}}$) in Form des Mengenverhältnisses der Komponente der ersten Metrik, die das auf das Umgebungsinfrarot nicht-künstlicher Quelle zurückzuführende Infrarotsignal charakterisiert, zur zweiten Metrik zu berechnen, und; die Verteilung ($\frac{S_{IRambiant}}{S_{visible}}$) mit einer vorbestimmten Zielverteilung ($\frac{C_{IR}}{C_{visible}}$) zu vergleichen (306), und dass der Regelungssollwert ($C_{visible}$, $C_{IR}$) eine Funktion dieses Vergleichs ist.

2. Erfassungssystem (100) nach dem vorhergehenden Anspruch, **dadurch gekennzeichnet, dass** die mindestens eine künstliche Lichtquelle eine künstliche Quelle (30) für sichtbares Licht umfasst, die ein Lichtsignal im Sichtbaren aussendet, und dass der mindestens eine Regelungssollwert ein Regelungssollwert für das sichtbare Signal ($C_{visible}$) ist, in Abhängigkeit von welchem die künstliche Quelle (30) für sichtbares Licht gesteuert wird.

3. Erfassungssystem (100) nach einem der vorhergehenden Ansprüche, **dadurch gekennzeichnet, dass** die Bilderfassungsvorrichtung (1) ein Doppelbandpassfilter (12) umfasst, von dem:
im Fall eines Sensors (14) mit mindestens vier verschiedenen Photosites, der erste Durchlassbereich des Filters (12) konfiguriert ist, um sichtbare Wellenlängen kleiner als 650 nm durchzulassen, und im Fall eines Sensors (14) mit drei verschiedenen Photosites, der erste Durchlassbereich des Filters (12) sich zwischen 530 bis 650 nm erstreckt; und
der zweite Durchlassbereich sich von 800 bis 875 nm erstreckt.

4. Erfassungssystem (100) nach dem vorhergehenden Anspruch, **dadurch gekennzeichnet, dass** sich der zweite Durchlassbereich ab 760 nm-800 nm erstreckt.

5. Erfassungssystem (100) nach einem der vorhergehenden Ansprüche, **dadurch gekennzeichnet, dass**:
die künstliche Lichtquelle (20), die im Infraroten emittiert, konfiguriert ist, um in einem Nutzungsentfernungsbereich von 40 bis 100 cm ein Signal auszusenden, das äquivalent zu dem Signal ist, das durch ein intensives äußeres sichtbares Umgebungslicht, bei 1000 Lux, erzeugt wird, beispielsweise eine Leuchtdiode bei 850 nm, deren Spektrum sich von 800 bis 875 nm erstreckt.

6. Erfassungssystem (100) nach einem der Ansprüche 2 bis 5, bei dem die künstliche Lichtquelle (30), die im Sichtbaren emittiert, konfiguriert ist, um in völliger Dunkelheit zufriedenstellend zu beleuchten, bei 50 Lux in einer Nutzungsentfernung von etwa 70 cm.

7. Erfassungssystem (100) nach einem der vorhergehenden Ansprüche, **dadurch gekennzeichnet, dass** es eine andere Aufnahmevorrichtung (2) umfasst, die nur im Sichtbaren empfindlich ist, die mit der Erfassungsvorrichtung (1) synchronisiert ist und deren Belichtungsparameter unabhängig von denen der Erfassungsvorrichtung (1) gesteuert werden.

8. Verfahren (300) zur Erfassung eines Farbbildes ($I_{vis}$) und eines Infrarotbildes ($I_{IR}$) einer Szene, wobei das Erfassungsverfahren Schritte umfasst zum:
Empfang (302) eines Bildes ($I_B$) von einer Bilderfassungsvorrichtung (1), die für sichtbare und infrarote Wellenlängen empfindlich ist; Verarbeitung des empfangenen Bildes ($I_B$), wobei das Infrarotbild und das sichtbare Bild getrennt werden und mindestens ein zu regelndes Signal und ein zugehöriger Regelungssollwert definiert werden, wobei der mindestens eine Regelungssollwert (C) ein Infrarotsignal-Regelungssollwert ($C_{IR}$) ist, in Abhängigkeit von welchem mindestens eine künstliche Infrarotlichtquelle (20) gesteuert wird, wobei der Verarbeitungsschritt umfasst: einen Schritt (304) zur Berechnung von mindestens zwei Metriken ($S_{IR}$, $S_{visible}$) über das gesamte oder einen Teil des Bildes, wobei die erste Metrik ($S_{IR}$) das Infrarotsignal charakterisiert, die zweite Metrik ($S_{visible}$) das sichtbare Signal charakterisiert; einen Schritt (305) zur Schätzung einer Komponente ($S_{IRambiant}$) der ersten Metrik, die eine Infrarotsignalmenge charakterisiert, die auf das Umgebungsinfrarot zurückzuführen ist, das heißt nicht von der mindestens einen künstlichen Lichtquelle (20, 30) ausgesendet wird, und; einen Schritt zur Berechnung der Umgebungsbeleuchtungsverteilung ( $\frac{S_{IRambient}}{S_{visible}}$ ) in Form des Mengenverhältnisses der Komponente der ersten Metrik, die das auf das Umgebungsinfrarot nicht-künstlicher Quelle zurückzuführende Infrarotsignal charakterisiert, zur zweiten Metrik, und; einen Schritt zum Vergleich (306) der Verteilung ( $\frac{S_{IRambient}}{S_{visible}}$ ) mit einer vorbestimmten Zielverteilung ( $\frac{C_{IR}}{C_{visible}}$ ), und dass der Regelungssollwert ($C_{IR}$) des Infrarotsignals eine Funktion des Vergleichs ist.

9. Erfassungsverfahren (300) nach dem vorhergehenden Anspruch, **dadurch gekennzeichnet, dass** der mindestens eine Regelungssollwert (C) einen Regelungssollwert ( $C_{visible}$) für das sichtbare Signal umfasst, in Abhängigkeit von welchem eine künstliche Quelle (30) für sichtbares Licht gesteuert wird, und dass der Regelungssollwert ($C_{visible}$) für das sichtbare Signal eine Funktion des Vergleichs ist.

10. Erfassungsverfahren (300) nach einem der Ansprüche 8 bis 9, bei dem der Verarbeitungsschritt einen Schritt (303) zur Erkennung eines Objekts (150) im Farbbild oder Infrarotbild und zur Bestimmung des Abstands (d) zwischen dem erkannten Objekt (150) und der Erfassungsvorrichtung (1) umfasst.

11. Erfassungsverfahren (300) nach dem vorhergehenden Anspruch, **dadurch gekennzeichnet, dass** der Teil des Bildes ein Interessensbereich des Bildes ist, der das erkannte Objekt begrenzt, wobei das Objekt insbesondere ein Körperteil (150) oder eine Information ist, wie beispielsweise ein visueller Code, insbesondere gedruckt auf einem physischen Dokument.

12. Erfassungsverfahren (300) nach einem der Ansprüche 8 bis 11, **dadurch gekennzeichnet, dass** die mindestens zwei Metriken ($S_{IR}$, $S_{visible}$) als mindestens der Mittelwert über das gesamte oder den Teil des Bildes auf jedem Wellenlängenkanal des charakterisierten Signals berechnet werden.

13. Erfassungsverfahren (300) nach einem der Ansprüche 8 bis 12, **dadurch gekennzeichnet, dass** der Verarbeitungsschritt umfasst:

    - einen Schritt (307) zur Berechnung eines anzuwendenden Belichtungsparameters der Erfassungsvorrichtung (1), wie beispielsweise Verstärkung und/oder Belichtungszeit, in Abhängigkeit vom Verhältnis des mindestens einen Regelungssollwerts ($C_{IR}$, $C_{visible}$) zu dem zugehörigen zu regelnden Signal, um den mindestens einen Regelungssollwert zu erreichen;
    oder
    - einen Schritt zur Berechnung (308, 309) des Steuerbefehls der künstlichen Infrarot-und/oder sichtbaren Lichtquelle (20, 30).

14. Erfassungsverfahren (300) nach einem der Ansprüche 8 bis 13, **dadurch gekennzeichnet, dass** es einen Initialisierungsschritt (301) umfasst, der ein iteratives Abtasten von Konfigurationen bis zur Erkennung des Objekts durchführt, wobei jede Konfiguration mindestens einen Belichtungsparameter, wie Verstärkung oder Belichtungszeit, und einen Intensitätsparameter der mindestens einen künstlichen Lichtquelle umfasst, wobei die Werte der Parameter in jeder Konfiguration auf vorbestimmte Werte festgelegt sind.

15. Ein Verfahren zur Authentifizierung eines Körperteils, **dadurch gekennzeichnet, dass** es umfasst:

    - Erfassen eines Farbbildes ($I_{vis}$) und eines Infrarotbildes ($I_{IR}$) des Körperteils durch das Erfassungsverfahren (300) nach einem der Ansprüche 8 bis 14 und dass das erkannte Objekt ein Körperteil (150) ist; und
    - Authentifizieren des Körperteils anhand der Farbbilder ($I_{vis}$) und Infrarotbilder ($I_{IR}$).

16. Eine Vorrichtung (A) zur Authentifizierung eines Körperteils, umfassend:

    - ein Bilderfassungssystem (100) nach einem der Ansprüche 1 bis 7; und
    - wobei das Verarbeitungsmodul (16) konfiguriert ist, um ein Körperteil (150) aus dem empfangenen Bild zu erkennen und um eine Authentifizierung des erkannten Körperteils anhand der Farbbilder ($I_{vis}$) und Infrarotbilder ($I_{IR}$) durchzuführen.

**Claims**

1. System (100) for acquiring a color image (Ivis) and an infrared image (IIR) of a scene, said acquisition system comprising

    - at least one artificial light source illuminating said scene, said at least one source comprising an artificial source (20) of infrared light emitting a light signal in the infrared:
    - an image acquisition device (1), said device being sensitive to visible and infrared wavelengths, comprising:

        - a sensor (14);
        - a lens (10) configured to focus the light received at the input of the acquisition device (1) onto the sensor (14), a double band-pass filter (12) of which:

        - in the case of a sensor (14) with at least four different photosites, the first passband of the filter (12) is configured to pass visible wavelengths, and in the case of a sensor (14) with three different photosites, the first passband of the filter (12) is configured so as to attenuate the blue component of the light; and

- the second passband is configured to pass infrared wavelengths, said double band-pass filter (12) being placed in front of the sensor (14), and notably between the lens (10) and said sensor (14);

- a processing module (16) connected to said image acquisition device (1) configured to separate, at the sensor output (14), the infrared image ($I_{IR}$) and the visible image ($I_{vis}$) and to define at least one signal to be servo-controlled and an associated servo control setpoint (C), said at least one servo control setpoint being a servo control setpoint for an infrared signal ($C_{IR}$) as a function of which at least the artificial source (20) of infrared light is driven, said processing module being configured to: calculate (304) at least two metrics ($S_{IR}$, $S_{visible}$) on all or part of the image, the first metric ($S_{IR}$) characterizing the infrared signal, the second metric ($S$visible) characterizing the visible signal;

estimate (305) a component ($S_{IRambient}$) of the first metric characterizing a quantity of infrared signal due to ambient infrared, that is to say not emitted by the at least one artificial source (20, 30) of light, and;

calculate an ambient lighting distribution ($\frac{S_{IRambient}}{S_{visible}}$) form of the ratio of quantity of the component of the first metric characterizing the infrared signal due to ambient infrared of non-artificial source over the second metric, and; compare (306) said distribution ($\frac{S_{IRambient}}{S_{visible}}$) to a predetermined target distribution ($\frac{C_{IR}}{C_{visible}}$), and in that the servo control setpoint ($C_{visible}$, $C_{IR}$) is a function of said comparison.

2. Acquisition system (100) according to the preceding claim **characterized in that** said at least one artificial light source comprises an artificial source (30) of visible light emitting a light signal in the visible and **in that** said at least one servo control setpoint is a servo control setpoint of visible signal ($C_{visible}$) as a function of which the artificial source (30) of visible light is driven.

3. Acquisition system (100) according to any one of the preceding claims **characterized in that** said image acquisition device (1) comprises a double passband filter (12) of which:

- in the case of a sensor (14) with at least four different photosites, the first passband of the filter (12) is configured to pass visible wavelengths lower than 650 nm, and in the case of a sensor (14) with three different photosites, the first passband of the filter (12) extends between 530 to 650 nm; and
- the second passband extends from 800 to 875 nm.

4. Acquisition system (100) according to the preceding claim **characterized in that** the second passband extends from 760 nm-800 nm.

5. Acquisition system (100) according to any one of the preceding claims **characterized in that**:

- the artificial source (20) of light emitting in the infrared is configured to emit, within a usage distance range, of 40 to 100 cm, a signal equivalent to the signal generated by intense external ambient visible light, at 1000 lux, for example a light-emitting diode at 850 nm, whose spectrum extends from 800 to 875 nm.

6. Acquisition system (100) according to any one of claims 2 to 5 wherein the artificial source (30) of light emitting in the visible is configured to illuminate satisfactorily in complete darkness, at 50 lux at a usage distance of approximately 70 cm.

7. Acquisition system (100) according to any one of the preceding claims **characterized in that** it comprises another shooting device (2) only sensitive in the visible, synchronized with the acquisition device (1) and whose exposure parameters are controlled independently of those of the acquisition device (1).

8. Method (300) for acquiring a color image ($I_{vis}$9. and an infrared image ($I_{IR}$10. of a scene, said acquisition method comprising steps of:

• reception (302) of an image ($I_B$) from an image acquisition device (1) sensitive to visible and infrared wavelengths; processing of said received image ($I_B$) separating the infrared image and the visible image and defining at least one signal to be servo-controlled and an associated servo control setpoint, said at least one servo control setpoint (C) being a servo control setpoint of infrared signal ($C_{IR}$) as a function of which at least one artificial source (20) of infrared light is driven., the processing step comprising: a step (304) of calculating at least two metrics ($S_{IR}$, $S_{visible}$) on all or part of the image, the first metric ($S_{IR}$) characterizing the infrared signal, the second metric ($S_{visible}$) characterizing the visible signal a step (305) of estimating a component ($S_{IRambient}$) of the first metric characterizing a quantity of infrared signal due to ambient infrared, that is to say not emitted by the at least one artificial source (20, 30) of light, and; a step of calculating ambient lighting distribution ( $\frac{S_{IRambient}}{S_{visible}}$ ) in the form of the ratio of quantity of the component of the first metric characterizing the infrared signal due to ambient infrared of non-artificial source over the second metric, and; a step of comparing (306) said distribution ( $\frac{S_{IRambient}}{S_{visible}}$ ) to a predetermined target distribution ( $\frac{C_{IR}}{C_{visible}}$ ), and in that the servo control setpoint ($C_{IR}$) of the infrared signal is a function of said comparison.

9. Acquisition method (300) according to the preceding claim **characterized in that** said at least one servo control setpoint (C) comprises a servo control setpoint ($C_{visible}$) of the visible signal as a function of which an artificial source (30) of visible light is driven, and **in that** the servo control setpoint ($C_{visible}$) of the visible signal is a function of the comparison.

10. Acquisition method (300) according to any one of claims 8 to 9 wherein the processing step comprises a step (303) of detecting an object (150) in the color or infrared image and determining distance (d) between the detected object (150) and said acquisition device (1).

11. Acquisition method (300) according to the preceding claim **characterized in that** said part of the image is a region of interest of the image delimiting said detected object, said object being notably a body part (150) or information, such as a visual code, notably printed on a physical document.

12. Acquisition method (300) according to any one of claims 8 to 11 **characterized in that** the at least two metrics ($S_{IR}$, $S_{visible}$) are calculated as being at minimum the average on all or said part of the image on each wavelength channel of said characterized signal.

13. Acquisition method (300) according to any one of claims 8 to 12 **characterized in that** the processing step comprises:

   - a step (307) of calculating exposure parameter of the acquisition device (1) to be applied, such as gain and/or exposure time, as a function of the ratio of the at least one servo control setpoint ($C_{IR}$, $C_{visible}$) over said associated signal to be servo-controlled, to reach said at least one servo control setpoint;
   or
   - a step of calculating (308, 309) driving command for the artificial source (20, 30) of infrared and/or visible light.

14. Acquisition method (300) according to any one of claims 8 to 13 **characterized in that** it comprises an initialization step (301) performing an iterative scan of configurations until the detection of the object, each configuration comprising at least one exposure parameter, such as gain or exposure time, and an intensity parameter of the at least one artificial light source, the values of said parameters being fixed at predetermined values in each configuration.

15. A method for authenticating a body part **characterized in that** it comprises:

   acquiring a color image ($I_{vis}$) and an infrared image ($I_{IR}$) of said body part by the acquisition method (300) according to one of claims 8 to 14 and **in that** the detected object is a body part (150); and
   authenticating the body part from said color ($I_{vis}$) and infrared ($I_{IR}$) images.

16. A device (A) for authenticating a body part, comprising:

   - an image acquisition system (100) according to one of claims 1 to 7; and
   - the processing module (16) being configured to detect a body part (150) from the received image and to perform an authentication of said detected body part from said color ($I_{vis}$) and infrared ($I_{IR}$) images.

[Fig 1]

**Fig. 1**

[Fig 2]

**Fig. 2**

[Fig 3]

Fig. 3

[Fig 4]

**Fig. 4**

[Fig 5]

**Fig. 5**

[Fig. 6]

**Fig. 6**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3102324
- EP 3242249 A1
- FR 2212301

**Littérature non-brevet citée dans la description**

- Linear demosaicing inspired by the human visual system. *IEEE Transactions on Image Processing*, April 2005, vol. 14 (4), 439-449
- **REDMON, J ; DIVVALA, S ; GIRSHICK, R ; FARHADI, A**. You only look once: Unified, real-time object detection. *Proceedings of the IEEE conference on computer vision and pattern recognition*, 2016, 779-788
- **HE et al.** Deep residual learning for image recognition. *Proceedings of the IEEE conference on computer vision and pattern recognition*, 2016, 770-778
- **ZHANG et al.** Intitulé « Colorful image colorization. *ECCV*, October 2016
- **PARKHI et al.** intitulé ''Deep face recognition'' et publié. *BMVC*, September 2015, vol. 1 (3), 6
- **AGARWAL et al.** titulé « Face presentation attack with latex masks in multispectral videos. *Proceedings of the IEEE Conference on Computer Vision and Pattern Recognition Workshop*, 81-89